# EUROPÄISCHE PATENTSCHRIFT

(11) **EP 3 197 629 B1**
(45) Veröffentlichungstag und Bekanntmachung des Hinweises auf die Patenterteilung: **17.08.2022**
(21) Anmeldenummer: 15756621.7
(22) Anmeldetag: 26.08.2015
(51) Int. Cl.: B23K 20/12, B23K 20/22, B21J 15/02, F16B 5/00

(54) **REIBELEMENTSCHWEISSVERFAHREN**
FRICTION ELEMENT WELDING METHOD
PROCÉDÉ DE SOUDAGE D'ÉLÉMENTS À FRICTION

(30) Priorität: 22.09.2014 DE 102014218975
(43) Veröffentlichungstag der Anmeldung: 02.08.2017
(73) Patentinhaber: Bayerische Motoren Werke Aktiengesellschaft, 80809 München (DE)
(72) Erfinder: BIERE, Alexander, Greenville 29609, SC (US); FORSTER, Andreas, 92526 Oberviechtach (DE); WILHELM, Maximilian, 87439 Kempten (DE)
(86) Internationale Anmeldenummer: PCT/EP2015/069539
(87) Internationale Veröffentlichungsnummer: WO 2016/045900

(56) Entgegenhaltungen:
- EP-A1- 2 762 731
- DE-A1- 19 731 638
- DE-U1-202009 000 794
- US-A1- 2003 201 306
- US-A1- 2004 232 209

## Beschreibung

Die Erfindung betrifft ein Reibelementschweißverfahren zur Verbindung von Aluminiumbauteilen mit Aluminiumbauteilen.

Aus dem Stand der Technik ist das Reibelementschweißverfahren zur Verbindung von Stahlbauteilen sowie Aluminium- und Stahlbauteilen seit langem bekannt. Auch gibt es bereits verschiedene Ansätze zur Ausbildung des die Fügeelemente verbindenden Reibverbinders, wie sie beispielsweise in der DE102009006775A1 oder der DE102010046318A1 beschrieben sind.

Weitere Verfahren sind aus den Dokumenten EP 2 762 731 A1, US 2004/232209 A1 und der DE 20 2009 000794 U1 bekannt.

Dabei beschreibt das Dokument US2004/232209 A1 ein Reibelementschweißverfahren, bei welchem ein erstes und ein zweites Fügeelement durch einen Reibverbinder verbunden werden, welcher durch eines der Fügeelemente hindurchgeführt wird, und sowohl die beiden Fügeelemente als auch der Reibverbinder aus Aluminium gebildet sind.

Es ist deshalb die Aufgabe der Erfindung, ein verbessertes Reibelementschweißverfahren für Fügeelemente und einem Reibverbinder aus Aluminium zur Verfügung zu stellen.

Diese Aufgabe wird durch die Merkmalskombination gemäß Patentanspruch 1 gelöst.

Hierzu wird erfindungsgemäß ein Reibelementschweißverfahren zum Verbinden eines ersten oberen Fügeelements und eines zweiten unteren Fügeelements mit den Merkmalen gemäß Anspruch 1 vorgeschlagen, wobei das erste und zweite Fügeelement aneinander anliegen und über einen Reibverbinder zusammengefügt werden, wobei der Reibverbinder durch das erste obere Fügeelement hindurchgeführt und an dem zweiten unteren Fügeelement durch Reibschweißen stoffschlüssig befestigt wird, und wobei das erste obere und das zweite untere Fügeelement sowie der Reibverbinder aus Aluminium gebildet sind.

Beim Reibschweißen wird durch die beim Eindrücken des Reibverbinders entstehende Reibung das erste Fügeelement stoffschlüssig mit dem zweiten Fügeelement verbunden, während die Fügeelemente aneinander anliegend gehalten werden. Zunächst wird dabei das erste Fügeelement durchdrungen und dann der Stoffschluss mit dem zweiten Fügeelement hergestellt.

Bei dem erfindungsgemäßen Reibelementschweißverfahren ist vorgesehen, dass das erste Fügeelement ebenfalls aus Aluminium gebildet ist, um eine Aluminium-Aluminium-Verbindung zu ermöglichen. Dabei ist zum leichteren Durchreiben des ersten Fügeelements aus Aluminium vorgesehen, dass der Aluminium-Reibverbinder mit einer seinen Schmelzpunkt erhöhenden Legierung gebildet ist. Zusätzlich ist das erste Fügeelement aus Aluminium mit einer seinen Schmelzpunkt senkenden Legierung gebildet. Auf diese Weise ist sichergestellt, dass der Reibverbinder das erste obere Fügeelement leichter durchdringt und nicht mit dem oberen Fügeelement verschmilzt, bevor es durchrieben wurde.

Beispielsweise kann als den Schmelzpunkt des ersten Fügeelements senkende Legierung Silizium und als den Schmelzpunkt des Reibverbinders erhöhende Legierung Kupfer verwendet werden.

Erfindungsgemäß ist in dem ersten Fügeelement aus Aluminium eine Vorbohrung vorgesehen, deren Durchmesser geringer ist als derjenige des Reibverbinders. Somit erfolgt das Durchreiben vereinfacht und das zu beseitigende Durchdringungsmaterial des ersten oberen Fügeelements ist reduziert.

Eine Weiterbildung der Erfindung ist in dem abhängigen Anspruch 2 dargelegt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können weitere Legierungen bei dem ersten und/oder zweiten Fügeelement und/oder dem Reibverbinder eingesetzt werden, um das Reibschweißverfahren an die jeweilige technische Anforderung anzupassen, wobei die Legierungen durch die nachfolgenden Ansprüche definiert werden.

## Patentansprüche

1. Reibelementschweißverfahren zum Verbinden eines ersten oberen Fügeelements und eines zweiten unteren Fügeelements, wobei das erste und zweite Fügeelement aneinander anliegen und über einen Reibverbinder zusammengefügt werden,
wobei der Reibverbinder durch das erste obere Fügeelement hindurchgeführt und an dem zweiten unteren Fügeelement durch Reibschweißen stoffschlüssig befestigt wird
wobei das erste obere und das zweite untere Fügeelement sowie der Reibverbinder aus Aluminium gebildet sind, **dadurch gekennzeichnet, dass** das erste Fügeelement eine Vorbohrung aufweist, deren Durchmesser geringer ist als derjenige des Reibverbinders, der Reibverbinder aus Aluminium mit einer seinen Schmelzpunkt erhöhenden Legierung gebildet ist und das erste Fügeelement aus Aluminium mit einer seinen Schmelzpunkt senkenden Legierung gebildet ist.

2. Reibelementschweißverfahren nach Anspruch 1, **dadurch gekennzeichnet, dass** die den Schmelzpunkt des ersten Fügeelements senkenden Legierung Silicium ist.

## Claims

1. Friction element welding method for connecting a first upper joining element and a second lower joining element, wherein the first and second joining element bear against one another and are joined together by means of a friction connector, wherein the friction connector is guided through the first upper joining element and is fastened to the second lower joining element in a materially bonded manner by friction welding, wherein the first upper and the second lower joining element, and also the friction connector, are formed from aluminium, **characterized in that**
the first joining element has a pilot bore whose diameter is smaller than that of the friction connector,
the friction connector composed of aluminium is formed with an alloy which increases the melting point thereof,
and the first joining element composed of aluminium is formed with an alloy which lowers the melting point thereof.

2. Friction element welding method according to Claim 1, **characterized in that** the alloy which lowers the melting point of the first joining element is silicon.

## Revendications

1. Procédé de soudage d'éléments par friction destiné à relier un premier élément d'assemblage supérieur et un deuxième élément d'assemblage inférieur, les premier et deuxième éléments d'assemblage étant en appui l'un sur l'autre et étant assemblés par le biais d'un connecteur à friction,
le connecteur à friction étant passé à travers le premier élément d'assemblage supérieur et étant fixé par liaison de matière au deuxième élément d'assemblage inférieur par soudage par friction,
le premier élément d'assemblage supérieur et le deuxième élément d'assemblage inférieur et le connecteur à friction étant en aluminium, **caractérisé en ce que**
le premier élément d'assemblage comporte un avant-trou dont le diamètre est inférieur à celui du connecteur à friction,
le connecteur à friction est formé en aluminium avec un alliage qui augmente son point de fusion,
et le premier élément d'assemblage est formé en aluminium avec un alliage qui abaisse son point de fusion.

2. Procédé de soudage d'élément par friction selon la revendication 1, **caractérisé en ce que** l'alliage qui abaisse le point de fusion du premier élément d'assemblage est le silicium.
